(19) Europäisches Patentamt
European Patent Office
Office européen des brevets

(11) **EP 2 912 212 B1**

(12) **EUROPEAN PATENT SPECIFICATION**

(45) Date of publication and mention of the grant of the patent:
**15.11.2017 Bulletin 2017/46**

(51) Int Cl.:
*C23F 11/00* (2006.01)   *C23F 11/04* (2006.01)
*C09K 8/74* (2006.01)   *C09K 8/54* (2006.01)

(21) Application number: **13851255.3**

(22) Date of filing: **17.09.2013**

(86) International application number:
**PCT/US2013/060058**

(87) International publication number:
**WO 2014/070319 (08.05.2014 Gazette 2014/19)**

(54) **WITHANOLIDE CORROSION INHIBITOR FOR CARBON STEEL**

WITHANOLIDKORROSIONSINHIBITOR FÜR KOHLENSTOFFSTAHL

INHIBITEUR DE CORROSION AU WITHANOLIDE DESTINÉ À L'ACIER AU CARBONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.10.2012 US 201213662878**

(43) Date of publication of application:
**02.09.2015 Bulletin 2015/36**

(73) Proprietor: **Halliburton Energy Services, Inc.**
**Houston, TX 77032-3219 (US)**

(72) Inventors:
• **BELAKSHE, Ravikant, S.**
**Pune 411027 (IN)**
• **SALGAONKAR, Lalit, Pandurang**
**Pune 411038 (IN)**
• **DANAIT, Achala, V.**
**Pune 411004 (IN)**

(74) Representative: **Cottrill, Emily Elizabeth Helen**
**A.A. Thornton & Co.**
**10 Old Bailey**
**London EC4M 7NG (GB)**

(56) References cited:
WO-A2-2006/117517   US-A- 5 435 941
US-A1- 2008 295 728   US-A1- 2010 084 612
US-A1- 2011 232 679

• J DUBEY ET AL: "Corrosion Inhibitive Effects of Withania Somnifera (A medicinal plant) on Aluminium in HCl Solution", RESEARCH JOURNAL OF RECENT SCIENCES, vol. 1, no. 73, 1 January 2012 (2012-01-01), pages 2277-2502, XP055251237, ISSN: 2277-2502
• J DUBEY ET AL: "Effect of Temperature on Corrosion Inhibition Efficiency of Withania Somnifera (Ashwagandha) on Aluminium in HCl Solution", JOURNAL OF CORROSION SCIENCE AND ENGINEERING, vol. 13, 7 January 2010 (2010-01-07), XP055251251, ISSN: 1466-8858

**Description**

TECHNICAL FIELD

The inventions are in the field of producing crude oil or natural gas from subterranean formations. More particularly, the inventions relate to corrosion inhibition of carbon steel in wells or transportation pipelines.

BACKGROUND

*Acidic Fluids, Corrosion, and Inhibition*

Acidic fluids are present in a multitude of operations in the oil and gas industry. For example, acidic fluids are often used in wells penetrating subterranean formations. Such acidic fluids may be used, for example, in stimulation operations or cleanup operations in oil and gas wells. Acidic stimulation operations may use these treatment fluids in hydraulic fracturing and matrix acidizing treatments. In operations using acidic well fluids, metal surfaces of piping, tubing, pumps, blending equipment, downhole tools, etc. may be exposed to the acidic fluid.

Acidic fluids are sometimes used in pipelines that are used for the transportation of hydrocarbons. For example, acidic fluids may be used in an exothermic reaction to generate heat in a pipeline to help remediate paraffin wax buildup in the pipeline. Paraffin wax deposition is found practically whenever crude oil is produced and transported. Paraffin wax deposition obstructs the flow of oil, lowering oil production and interfering with transportation.

Acidic fluids can include one or more of a variety of acids, such as hydrochloric acid, acetic acid, formic acid, hydrofluoric acid, or any combination of such acids. In addition, many fluids used in the oil and gas industry include a water source that may incidentally contain certain amounts of acid, which may cause the fluid to be at least slightly acidic.

Even weakly acidic fluids can be problematic in that they can cause corrosion of metals. Corrosion can occur anywhere in a well production system or pipeline system, including anywhere downhole in a well or in surface lines and equipment.

The expense of repairing or replacing corrosion damaged equipment is extremely high. The corrosion problem is exacerbated by the elevated temperatures encountered in deeper formations. The increased corrosion rate of the ferrous and other metals comprising the tubular goods and other equipment results in quantities of the acidic solution being neutralized before it ever enters the subterranean formation, which can compound the deeper penetration problem discussed above. In addition, the partial neutralization of the acid from undesired corrosion reactions can result in the production of quantities of metal ions that are highly undesirable in the subterranean formation.

To combat this potential corrosion problem in operations with acidic well fluids, corrosion inhibitors have been used to reduce corrosion to metals and metal alloys with varying degrees of success. A difficulty encountered with the use of some conventional corrosion inhibitors is the limited temperature range over which they may function effectively. For example, certain conventional antimony-based inhibitor formulations have been limited to temperatures above 130 °C (270 °F) and do not appear to function effectively below this temperature.

Another drawback of some conventional corrosion inhibitors is that certain components of these corrosion inhibitors may not be compatible with the environmental standards in some regions of the world. For example, quaternary ammonium compounds, mercaptan-based compounds, and "Mannich" condensation compounds have been used as corrosion inhibitors. However, these compounds generally are not acceptable under stricter environmental regulations, such as those applicable or that will become applicable in the North Sea region. Consequently, operators in some regions may be forced to suffer increased corrosion problems, resort to using corrosion inhibitor formulations that may be less effective, or forgo the use of certain acidic treatment fluids.

Yet another drawback of some convention corrosion inhibitors is the high cost. The document "Corrosion Inhibitive Effects of Withania Somnifera (A medicinal plant) on Aluminium in HCl Solution", by J. Dubey et al, published in RESEARCH JOURNAL OF RECENT SCIENCES, vol. 1, no. 73, 1 January 2012 (2012-01-01), pages 2277-2502, XP055251237,ISSN: 2277-2502 discloses the use of Withania Sominfera extract as corrosion inhibitor for aluminium surfaces in acidic solutions.

*Well Treatment - Acidizing*

A widely used stimulation technique is acidizing, in which a treatment fluid including or forming an aqueous acid solution is introduced into the formation to dissolve acid-soluble materials. This can accomplish a number of purposes, which can be, for example, to help remove residual fluid material or filtercake damage or to increase the permeability of a treatment zone. In this way, hydrocarbon fluids can more easily flow from the formation into the well. In addition, an acid treatment can facilitate the flow of injected treatment fluids from the well into the formation. This procedure enhances production by increasing the effective well radius.

Acidizing techniques can be carried out as matrix acidizing procedures or as acid fracturing procedures.

In matrix acidizing, an acidizing fluid is injected from the well into the formation at a rate and pressure below the pressure sufficient to create a fracture in the formation. In sandstone formations, the acid primarily removes or dissolves acid soluble damage in the near wellbore region and is thus classically considered a damage removal technique and not a stimulation technique. In carbonate formations, the goal is to actually run a stimulation treatment where the acid dissolves the carbonate rock to create interconnected channels called wormholes in the rock.

In acid fracturing, an acidizing fluid is pumped into a carbonate formation at a sufficient pressure to cause fracturing of the formation and creating differential (nonuniform) etching fracture conductivity. Acid fracturing involves the formation of one or more fractures in the formation and the introduction of an aqueous acidizing fluid into the fractures to etch the fracture faces, whereby flow channels are formed when the fractures close. The aqueous acidizing fluid also enlarges the pore spaces in the fracture faces and in the formation.

Greater details, methodology, and exceptions can be found in "Production Enhancement with Acid Stimulation" 2nd edition by Leonard Kalfayan (PennWell 2008), SPE 129329, SPE 123869, SPE 121464, SPE 121803, SPE 121008, IPTC 10693, SPE 66564-PA, and the references contained therein.

The use of the term "acidizing" herein refers to both matrix and fracturing types of acidizing treatments, and more specifically, refers to the general process of introducing an acid down hole to perform a desired function, e.g., to acidize a portion of a subterranean formation or any damage contained therein.

*Pipelines, Pipeline Fluids, and Pipeline Corrosion*

Hydrocarbon is typically produced from a well at relatively high temperature compared to ambient conditions on the surface. After a hydrocarbon flows from a subterranean formation into the production tubulars of the wellbore, it is transported through the tubulars of the wellbore to the wellhead. Further, the hydrocarbon produced at the wellhead must be transported to a refinery to be processed and separated into various components, e.g., to make various grades of fuels and oils. A common method of transporting hydrocarbon is through pipelines. Pipelines are at or near the surface of the ground or can be subsea at or near the seabed. The temperature of the pipelines is much lower than the temperature of the subterranean formation.

As crude oil flows through the production tubulars from the hydrocarbon-bearing formation through the wellbore toward the surface, the surrounding temperature of the wellbore tends to decline toward the surface, allowing heat to dissipate from the fluid and causing the hydrocarbon fluid to begin to cool. Further, as the crude oil is moved through cross-country pipelines, it can lose heat energy to the ground or environment and cool to a temperature well below 120 °F (49 °C). Thus, the hot crude oil from a subterranean formation tends to be cooled as it flows through these conduits.

As the temperature of the crude oil falls, paraffin wax in the crude oil tends to become a solid, waxy material that falls out of the crude oil and paraffin deposits accumulate on the inner walls of the production tubing and pipelines. This can be particularly problematic in subsea pipelines because the surrounding water on the seafloor is very cold, typically about 39 °F (4 °C).

To help prevent paraffin deposits, some cross-country pipelines are heated, which is very costly. However, this is not feasible for subsea pipelines, which are in direct contact with the surrounding cold seawater.

As the paraffin wax deposits build up on the inside wall of a conduit, the opening for fluid flow through the pipeline becomes smaller and smaller. Unless at least some of the buildup is removed from time to time, eventually the deposits can increase to the point where the conduit becomes choked. Also, sometimes some of the paraffin deposits will release from the inside wall of a pipeline and cause a blockage. Such a blockage can occur anywhere in the pipeline. This paraffin deposition leads to reduced crude oil flow and under extreme conditions leads to complete blockage of the pipelines.

Removal of the paraffin wax deposits is attempted through three main approaches: mechanical, thermal, and chemical. Often, a combination of two or more of these types of approaches is employed. One of the thermal-chemical approaches is to use an acid-base reaction to generate heat, but this can also expose the metal of the pipeline to acid corrosion.

## SUMMARY OF THE INVENTION

Disclosed herein is a method of treating a portion of a well or a pipeline with a fluid comprising an aqueous acidic phase is provided, the method comprising the steps of: (A) forming the fluid comprising an aqueous acidic phase, the fluid additionally comprising a material selected from the group consisting of: a material of a plant in the Solanaceae family, an extract of a material of a plant in the Solanaceae family, a withanolide, a source of a withanolide, a withanolide derivative, a source of a withanolide derivative, and any combination thereof; and (B) introducing the fluid into the portion of the well or pipeline; wherein the fluid contacts carbon steel in the well or pipeline.

Disclosed herein is a method of inhibiting corrosion of carbon steel to be contacted with a fluid comprising an aqueous acidic phase is provided, the method comprising the steps of: (A) forming the fluid comprising an aqueous acidic phase, the fluid additionally comprising a material selected from the group consisting of: a material of a plant in the Solanaceae family, an extract of a material of a plant in the Solanaceae family, a withanolide, a source of a withanolide, a withanolide derivative, a source of a withanolide derivative, and any combination thereof; and (B) contacting the carbon steel with the fluid.

The present invention relates to a method of contacting carbon steel with a fluid comprising an aqueous acidic phase is provided, the method comprising the step of: including in the fluid Withania somnifera extract.

These and other aspects of the invention will be apparent to one skilled in the art upon reading the following detailed description. While the invention is susceptible to various modifications and alternative forms, specific embodiments thereof will be described in detail and shown by way of example. It should be understood, however, that it is not intended to limit the invention to the particular forms disclosed, but, on the contrary, the invention is to cover all modifications and alternatives falling within the scope of the invention as expressed in the appended claims.

## DETAILED DESCRIPTION OF PRESENTLY PREFERRED EMBODIMENTS

## AND BEST MODE

### **Definitions and Usages**

*Interpretation*

The words or terms used herein have their plain, ordinary meaning in the field of this disclosure, except to the extent explicitly and clearly defined in this disclosure or unless the specific context otherwise requires a different meaning.

If there is any conflict in the usages of a word or term in this disclosure and one or more patent(s) or other documents, the definitions that are consistent with this specification should be adopted.

The words "comprising," "containing," "including," "having," and all grammatical variations thereof are intended to have an open, non-limiting meaning. For example, a composition comprising a component does not exclude it from having additional components, an apparatus comprising a part does not exclude it from having additional parts, and a method having a step does not exclude it having additional steps. When such terms are used, the compositions, apparatuses, and methods that "consist essentially of" or "consist of" the specified components, parts, and steps are specifically included and disclosed.

The indefinite articles "a" or "an" mean one or more than one of the component, part, or step that the article introduces.

*Well Servicing and Well Fluids*

To produce oil or gas from a reservoir, a wellbore is drilled into a subterranean formation, which may be the reservoir or adjacent to the reservoir. The "wellbore" refers to the drilled hole, including a cased or uncased portion of the well. As used herein, the "borehole" refers to the inside wellbore wall, that is, the rock face or wall that bounds the drilled hole. A wellbore can have portions that are vertical and horizontal, and it can have portions that are straight, curved, or branched. The wellhead is the surface termination of a wellbore, which surface may be on land or on a seabed. As used herein, "uphole" and "downhole" and similar terms are relative to the wellhead, regardless of whether a wellbore portion is vertical or horizontal.

Generally, well services include a wide variety of operations that may be performed in oil, gas, geothermal, or water wells, such as drilling, cementing, completion, and intervention. Well services are designed to facilitate or enhance the production of desirable fluids such as oil or gas from or through a subterranean formation. A well service usually involves introducing a well fluid into a well.

Drilling, completion, and intervention operations can include various types of treatments that are commonly performed on a well or subterranean formation. For example, a treatment for fluid-loss control can be used during any of drilling, completion, and intervention operations. During completion or intervention, stimulation is a type of treatment performed to enhance or restore the productivity of oil and gas from a well. Stimulation treatments fall into two main groups: hydraulic fracturing and matrix treatments. Fracturing treatments are performed above the fracture pressure of the subterranean formation to create or extend a highly permeable flow path between the formation and the wellbore. Matrix treatments are performed below the fracture pressure of the formation. Other types of completion or intervention treatments can include, for example, gravel packing, consolidation, and controlling excessive water production.

*Well and Pipeline Terms*

A "well" includes a wellhead and at least one wellbore from the wellhead penetrating the earth. The "wellhead" is the surface termination of a wellbore, which surface may be on land or on a seabed. A "well site" is the geographical location of a wellhead of a well. It may include related facilities, such as a tank battery, separators, compressor stations, heating or other equipment, and fluid pits. If offshore, a well site can include a platform.

The "wellbore" refers to the drilled hole, including any cased or uncased portions of the well or any other tubulars in the well. The "borehole" usually refers to the inside wellbore wall, that is, the rock surface or wall that bounds the drilled hole. A wellbore can have portions that are vertical, horizontal, or anything in between, and it can have portions that are straight, curved, or branched. As used herein, "uphole," "downhole," and similar terms are relative to the direction of the wellhead, regardless of whether a wellbore portion is vertical or horizontal.

A wellbore can be used as a production or injection wellbore. A production wellbore is used to produce hydrocarbons from the reservoir. An injection wellbore is used to inject a fluid, e.g., liquid water or steam, to drive oil or gas to a production wellbore.

As used herein, introducing "into a well" means introducing at least into and through the wellhead. According to various techniques known in the art, tubulars, equipment, tools, or well fluids can be directed from the wellhead into any desired portion of the wellbore.

As used herein, the word "tubular" means any kind of body in the general form of a tube. Examples of tubulars include, but are not limited to, a drill pipe, a casing, a tubing string, a line pipe, and a transportation pipe. Tubulars can also be used to transport fluids such as oil, gas, water, liquefied methane, coolants, and heated fluids into or out of a subterranean formation. For example, a tubular can be placed underground to transport produced hydrocarbons or water from a subterranean formation to another location.

"Pipeline transport" refers to a conduit made from pipes connected end-to-end for long-distance fluid transport. Oil or gas pipelines are made from steel or plastic tubulars with inner diameter typically from about 4 to about 60 inches (about 10 to about 150 cm). Most pipelines are typically buried at a depth of about 3 to about 6 feet (about 1 meter to about 2 meter). To protect pipes from impact, abrasion, and corrosion, a variety of methods are used. These can include wood lagging (wood slats), concrete coating, rockshield, high-density polyethylene, imported sand padding, and padding machines. The oil is kept in motion by pump stations along the pipeline, and usually flows at speed of about 3.3 to 20 ft/s (1 to 6 meters per second).

Gathering pipelines are a group of smaller interconnected pipelines forming complex networks with the purpose of bringing crude oil or natural gas from several nearby wells to a treatment plant or processing facility. In this group, pipelines are usually relatively short (usually about 100 to about 1000 yards or about 90 to about 900 meters) and with small diameters (usually about 10 cm to about 30 cm (about 4 to about 12 inches)). Also sub-sea pipelines for collecting product from deep water production platforms are considered gathering systems.

Transportation pipelines are mainly long pipes (many miles or kilometers) with large diameters (larger than about 12 inches or about 30 cm), moving products (oil, gas, refined products) between cities, countries, and even continents. These transportation networks include several compressor stations in gas lines or pump stations for crude oil or multi-product pipelines.

Distribution pipelines are composed of several interconnected pipelines with small diameters (usually about 2.5 cm to about 10 cm) (about 1 to about 4 inches)), used to take the products to the final consumer. An example of distribution pipelines is feeder lines to distribute natural gas to homes and businesses downstream. Pipelines at terminals for distributing products to tanks and storage facilities are included in this group.

As used herein, the term "annulus" means the space between two generally cylindrical objects, one inside the other. The objects can be concentric or eccentric. Without limitation, one of the objects can be a tubular and the other object can be an enclosed conduit. The enclosed conduit can be a wellbore or borehole or it can be another tubular. The following are some non-limiting examples illustrating some situations in which an annulus can exist. Referring to an oil, gas, or water well, in an open hole well, the space between the outside of a tubing string and the borehole of the wellbore is an annulus. In a cased hole, the space between the outside of the casing and the borehole is an annulus. In addition, in a cased hole there may be an annulus between the outside cylindrical portion of a tubular such as a production tubing string and the inside cylindrical portion of the casing. An annulus can be a space through which a fluid can flow or it can be filled with a material or object that blocks fluid flow, such as a packing element. Unless otherwise clear from the context, as used herein an annulus is a space through which a fluid can flow.

As used herein, a "well fluid" broadly refers to any fluid adapted to be introduced into a well for any purpose. A well fluid can be, for example, a drilling fluid, a cementing composition, a treatment fluid, or a spacer fluid. If a well fluid is to be used in a relatively small volume, for example less than about 200 barrels (about 8,400 US gallons or about 32 m$^3$), it is sometimes referred to as a wash, dump, slug, or pill.

As used herein, the word "treatment" refers to any treatment for changing a condition of a portion of a pipeline, a wellbore, or a subterranean formation adjacent a wellbore; however, the word "treatment" does not necessarily imply any particular treatment purpose. A treatment usually involves introducing a well fluid for the treatment, in which case it may be referred to as a treatment fluid, into a well. As used herein, a "treatment fluid" is a fluid used in a treatment. The word "treatment" in the term "treatment fluid" does not necessarily imply any particular treatment or action by the fluid.

A "portion" of a well or pipeline refers to any downhole portion of the well or any portion of the length of a pipeline.

A "zone" refers to an interval of rock along a wellbore that is differentiated from uphole and downhole zones based on hydrocarbon content or other features, such as permeability, composition, perforations or other fluid communication with the wellbore, faults, or fractures. A zone of a wellbore that penetrates a hydrocarbon-bearing zone that is capable of producing hydrocarbon is referred to as a "production zone." A "treatment zone" refers to an interval of rock along a wellbore into which a well fluid is directed to flow from the wellbore. As used herein, "into a treatment zone" means into and through the wellhead and, additionally, through the wellbore and into the treatment zone.

Generally, the greater the depth of the formation, the higher the static temperature and pressure of the formation. Initially, the static pressure equals the initial pressure in the formation before production. After production begins, the static pressure approaches the average reservoir pressure.

A "design" refers to the estimate or measure of one or more parameters planned or expected for a particular fluid or stage of a treatment or well service. For example, a fluid can be designed to have components that provide a minimum viscosity for at least a specified time under expected downhole conditions. A well service may include design parameters such as fluid volume to be pumped, required pumping time for a treatment, or the shear conditions of the pumping.

The term "design temperature" refers to an estimate or measurement of the actual temperature at the downhole environment at the time of a treatment. For example, the design temperature for a well treatment takes into account not only the bottom hole static temperature ("BHST"), but also the effect of the temperature of the well fluid on the BHST during treatment. The design temperature for a well fluid is sometimes referred to as the bottom hole circulation temperature ("BHCT"). Because well treatment fluids may be considerably cooler than BHST, the difference between the two temperatures can be quite large. Ultimately, if left undisturbed, a subterranean formation will return to the BHST.

*Substances, Chemicals, and Derivatives*

A substance can be a pure chemical or a mixture of two or more different chemicals.

A pure chemical is a sample of matter that cannot be separated into simpler components without chemical change. A chemical element is composed of atoms with identical atomic number. A chemical compound is formed from different elements chemically combined in definite proportions by mass.

An atom or molecule is the smallest particle of a chemical that retains the chemical properties of the element or compound. A molecule is two or more chemically bound atoms with characteristic composition and structure. Making or breaking bonds in a molecule changes it to a different chemical.

A metal is an element, compound, or alloy that is a good conductor of both electricity and heat. Metals are usually malleable, ductile, and shiny, that is they reflect most of incident light. In a metal, atoms readily lose electrons to form positive ions (cations). Those ions are surrounded by de-localized electrons, which are responsible for the conductivity. The solid thus produced is held together by electrostatic interactions between the ions and the electron cloud, which are called metallic bonds.

An ionic compound is made of distinguishable ions, including at least one cation (a positively charged ion) and at least one anion (a negatively charged ion), held together by electrostatic forces. An ion is an atom or molecule that has acquired a charge by either gaining or losing electrons. An ion can be a single atom or molecular. An ion can be separated from an ionic compound, for example, by dissolving the ions of the compound in a polar solvent.

As used herein, "modified" or "derivative" means a compound or substance formed by a chemical process from a parent compound or substance, wherein the chemical backbone skeleton of the parent compound or substance is retained in the derivative. The chemical process preferably includes at most a few chemical reaction steps, and more preferably only one or two chemical reaction steps. As used herein, a "chemical reaction step" is a chemical reaction between two chemical reactant species to produce at least one chemically different species from the reactants (regardless of the number of transient chemical species that may be formed during the reaction). An example of a chemical step is a substitution reaction. Substitution on the reactive sites of a polymeric material may be partial or complete.

*Physical States and Phases*

As used herein, "phase" is used to refer to a substance having a chemical composition and physical state that is distinguishable from an adjacent phase of a substance having a different chemical composition or a different physical state.

The word "material" is anything made of matter, constituted of one or more phases. Rock, water, air, metal, cement slurry, sand, and wood are all examples of materials. The word "material" can refer to a single phase of a substance on a bulk scale (larger than a particle) or a bulk scale of a mixture of phases, depending on the context.

As used herein, if not other otherwise specifically stated, the physical state or phase of a substance (or mixture of substances) and other physical properties are determined at a temperature of 77 °F (25 °C) and a pressure of 1 atmosphere (Standard Laboratory Conditions) without applied shear.

*Particles*

As used herein, a "particle" refers to a body having a finite mass and sufficient cohesion such that it can be considered as an entity but having relatively small dimensions. A particle can be of any size ranging from molecular scale to macroscopic, depending on context.

A particle can be in any physical state. For example, a particle of a substance in a solid state can be as small as a few molecules on the scale of nanometers up to a large particle on the scale of a few millimeters, such as large grains of sand. Similarly, a particle of a substance in a liquid state can be as small as a few molecules on the scale of nanometers up to a large drop on the scale of a few millimeters. A particle of a substance in a gas state is a single atom or molecule that is separated from other atoms or molecules such that intermolecular attractions have relatively little effect on their respective motions.

As used herein, particulate or particulate material refers to matter in the physical form of distinct particles in a solid or liquid state (which means such an association of a few atoms or molecules). As used herein, a particulate is a grouping of particles having similar chemical composition and particle size ranges anywhere in the range of about 0.5 micrometer (500 nm), e.g., microscopic clay particles, to about 3 millimeters, e.g., large grains of sand.

A particulate can be of solid or liquid particles. As used herein, however, unless the context otherwise requires, particulate refers to a solid particulate. Of course, a solid particulate is a particulate of particles that are in the solid physical state, that is, the constituent atoms, ions, or molecules are sufficiently restricted in their relative movement to result in a fixed shape for each of the particles.

It should be understood that the terms "particle" and "particulate," includes all known shapes of particles including substantially rounded, spherical, oblong, ellipsoid, rod-like, fiber, polyhedral (such as cubic materials), etc., and mixtures thereof. For example, the term "particulate" as used herein is intended to include solid particles having the physical shape of platelets, shavings, flakes, ribbons, rods, strips, spheroids, toroids, pellets, tablets or any other physical shape.

*Dispersions*

A dispersion is a system in which particles of a substance of one chemical composition and physical state are dispersed in another substance of a different chemical composition or physical state. In addition, phases can be nested. If a substance has more than one phase, the most external phase is referred to as the continuous phase of the substance as a whole, regardless of the number of different internal phases or nested phases.

A dispersion can be classified different ways, including, for example, based on the size of the dispersed particles, the uniformity or lack of uniformity of the dispersion, and, if a fluid, whether or not precipitation occurs.

A dispersion is considered to be heterogeneous if the dispersed particles are not dissolved and are greater than about 1 nanometer in size. (For reference, the diameter of a molecule of toluene is about 1 nm and a molecule of water is about 0.3 nm).

Heterogeneous dispersions can have gas, liquid, or solid as an external phase. For example, in a case where the dispersed-phase particles are liquid in an external phase that is another liquid, this kind of heterogeneous dispersion is more particularly referred to as an emulsion. A solid dispersed phase in a continuous liquid phase is referred to as a sol, suspension, or slurry, partly depending on the size of the dispersed solid particulate.

A dispersion is considered to be homogeneous if the dispersed particles are dissolved in solution or the particles are less than about 1 nanometer in size. Even if not dissolved, a dispersion is considered to be homogeneous if the dispersed particles are less than about 1 nanometer in size.

A solution is a special type of homogeneous mixture. A solution is considered homogeneous: (a) because the ratio of solute to solvent is the same throughout the solution; and (b) because solute will never settle out of solution, even under powerful centrifugation, which is due to intermolecular attraction between the solvent and the solute. An aqueous solution, for example, saltwater, is a homogenous solution in which water is the solvent and salt is the solute.

One may also refer to the solvated state, in which a solute ion or molecule is complexed by solvent molecules. A chemical that is dissolved in solution is in a solvated state. The solvated state is distinct from dissolution and solubility. Dissolution is a kinetic process, and is quantified by its rate. Solubility quantifies the concentration of the solute at which there is dynamic equilibrium between the rate of dissolution and the rate of precipitation of the solute. Dissolution and solubility can be dependent on temperature and pressure, and may be dependent on other factors, such as salinity or pH of an aqueous phase.

*Solubility Terms*

A substance is considered to be "soluble" in a liquid if at least 10 grams of the substance can be dissolved in one liter of the liquid when tested at 25 °C (77 °F) and 1 atmosphere pressure for 2 hours and considered to be "insoluble" if less than 1 gram per liter soluble and "sparingly soluble" for intermediate solubility values.

As will be appreciated by a person of skill in the art, the hydratability, dispersibility, or solubility of a substance in water can be dependent on the salinity, pH, or other substances in the water. Accordingly, the salinity, pH, and additive selection of the water can be modified to facilitate the hydratability, dispersibility, or solubility of a substance in aqueous solution. To the extent not specified, the hydratability, dispersibility, or solubility of a substance in water is determined in deionized water, at neutral pH, and without any other additives.

The "source" of a chemical species in a solution or in a fluid composition can be a material or substance that makes the chemical species chemically available immediately or it can be a material or substance that gradually or later releases the chemical species to become chemically available.

*Fluids*

A fluid can be a single phase or a dispersion. In general, a fluid is an amorphous substance that is or has a continuous phase of particles that are smaller than about 1 micrometer that tends to flow and to conform to the outline of its container.

Examples of fluids are gases and liquids. A gas (in the sense of a physical state) refers to an amorphous substance that has a high tendency to disperse (at the molecular level) and a relatively high compressibility. A liquid refers to an amorphous substance that has little tendency to disperse (at the molecular level) and relatively high incompressibility. The tendency to disperse is related to Intermolecular Forces (also known as van der Waal's Forces). (A continuous mass of a particulate, e.g., a powder or sand, can tend to flow as a fluid depending on many factors such as particle size distribution, particle shape distribution, the proportion and nature of any wetting liquid or other surface coating on the particles, and many other variables. Nevertheless, as used herein, a fluid does not refer to a continuous mass of particulate as the sizes of the solid particles of a mass of a particulate are too large to be appreciably affected by the range of Intermolecular Forces.)

As used herein, a fluid is a substance that behaves as a fluid under Standard Laboratory Conditions, that is, at 77 °F (25 °C) temperature and 1 atmosphere pressure, and at the higher temperatures and pressures usually occurring in subterranean formations without applied shear.

Every fluid inherently has at least a continuous phase. A fluid can have more than one phase. The continuous phase of a well fluid is a liquid under Standard Laboratory Conditions. For example, a well fluid can be in the form of be a suspension (solid particles dispersed in a liquid phase), an emulsion (liquid particles dispersed in another liquid phase), or a foam (a gas phase dispersed in a liquid phase).

As used herein, a water-based fluid means that water or an aqueous solution is the dominant material of the continuous phase, that is, greater than 50% by weight, of the continuous phase of the fluid.

In contrast, "oil-based" means that oil is the dominant material by weight of the continuous phase of the fluid. In this context, the oil of an oil-based fluid can be any oil.

In the context of a well fluid, oil is understood to refer to an oil liquid, whereas gas is understood to refer to a physical state of a substance, in contrast to a liquid. In general, an oil is any substance that is liquid under Standard Laboratory Conditions, is hydrophobic, and soluble in organic solvents. Oils have a high carbon and hydrogen content and are relatively non-polar substances, for example, having a polarity of 3 or less on the Snyder polarity index. This general definition includes classes such as petrochemical oils, vegetable oils, and many organic solvents. All oils can be traced back to organic sources.

*Apparent Viscosity of a Fluid*

Viscosity is a measure of the resistance of a fluid to flow. In everyday terms, viscosity is "thickness" or "internal friction." Thus, pure water is "thin," having a relatively low viscosity whereas honey is "thick," having a relatively higher viscosity. Put simply, the less viscous the fluid is, the greater its ease of movement (fluidity). More precisely, viscosity is defined as the ratio of shear stress to shear rate.

A fluid moving along solid boundary will incur a shear stress on that boundary. The no-slip condition dictates that the speed of the fluid at the boundary (relative to the boundary) is zero, but at some distance from the boundary the flow speed must equal that of the fluid. The region between these two points is aptly named the boundary layer. For all Newtonian fluids in laminar flow, the shear stress is proportional to the strain rate in the fluid where the viscosity is the constant of proportionality. However for non-Newtonian fluids, this is no longer the case as for these fluids the viscosity is not constant. The shear stress is imparted onto the boundary as a result of this loss of velocity.

A Newtonian fluid (named after Isaac Newton) is a fluid for which stress versus strain rate curve is linear and passes through the origin. The constant of proportionality is known as the viscosity. Examples of Newtonian fluids include water and most gases. Newton's law of viscosity is an approximation that holds for some substances but not others.

Non-Newtonian fluids exhibit a more complicated relationship between shear stress and velocity gradient (i.e., shear rate) than simple linearity. Thus, there exist a number of forms of non-Newtonian fluids. Shear thickening fluids have an apparent viscosity that increases with increasing the rate of shear. Shear thinning fluids have a viscosity that decreases with increasing rate of shear. Thixotropic fluids become less viscous over time at a constant shear rate. Rheopectic fluids become more viscous over time at a constant shear rate. A Bingham plastic is a material that behaves as a solid at low stresses but flows as a viscous fluid at high stresses.

Most well fluids are non-Newtonian fluids. Accordingly, the apparent viscosity of a fluid applies only under a particular set of conditions including shear stress versus shear rate, which must be specified or understood from the context. As used herein, a reference to viscosity is actually a reference to an apparent viscosity. Apparent viscosity is commonly expressed in units of centipoise ("cP").

Like other physical properties, the viscosity of a Newtonian fluid or the apparent viscosity of a non-Newtonian fluid may be highly dependent on the physical conditions, primarily temperature and pressure.

*Gels and Deformation*

The physical state of a gel is formed by a network of interconnected molecules, such as a crosslinked polymer or a network of micelles. The network gives a gel phase its structure and an apparent yield point. At the molecular level, a gel is a dispersion in which both the network of molecules is continuous and the liquid is continuous. A gel is sometimes considered as a single phase.

Technically, a "gel" is a semi-solid, jelly-like physical state or phase that can have properties ranging from soft and weak to hard and tough. Shearing stresses below a certain finite value fail to produce permanent deformation. The minimum shear stress which will produce permanent deformation is referred to as the shear strength or gel strength of the gel.

In the oil and gas industry, however, the term "gel" may be used to refer to any fluid having a viscosity-increasing agent, regardless of whether it is a viscous fluid or meets the technical definition for the physical state of a gel. A "base gel" is a term used in the field for a fluid that includes a viscosity-increasing agent, such as guar, but that excludes crosslinking agents. Typically, a base gel is mixed with another fluid containing a crosslinker, wherein the mixture is adapted to form a crosslinked gel. Similarly, a "crosslinked gel" may refer to a substance having a viscosity-increasing agent that is crosslinked, regardless of whether it is a viscous fluid or meets the technical definition for the physical state of a gel.

As used herein, a substance referred to as a "gel" is subsumed by the concept of "fluid" if it is a pumpable fluid.

*Viscosity and Gel Measurements*

There are numerous ways of measuring and modeling viscous properties, and new developments continue to be made. The methods depend on the type of fluid for which viscosity is being measured. A typical method for quality assurance or quality control (QA/QC) purposes uses a couette device that measures viscosity as a function of time, temperature, and shear rate, such as a FANN™ Model 35 or Model 50 viscometer or a CHANDLER™ Model 5550 HPHT viscometer. The viscosity-measuring instrument can be calibrated using standard viscosity silicone oils or other standard viscosity fluids.

Due to the geometry of most common viscosity-measuring devices, however, solid particulate, especially if larger than silt (larger than 74 micron), would interfere with the measurement on some types of measuring devices. Therefore, the viscosity of a fluid containing such solid particulate is usually inferred and estimated by measuring the viscosity of a test fluid that is similar to the fracturing fluid without any proppant or gravel that would otherwise be included. However, as suspended particles (which can be solid, gel, liquid, or gaseous bubbles) usually affect the viscosity of a fluid, the actual viscosity of a suspension is usually somewhat different from that of the continuous phase.

Unless otherwise specified, the apparent viscosity of a fluid (excluding any suspended solid particulate larger than silt) is measured with a FANN™ Model 35 type viscometer using an R1 rotor, B1 bob, and F1 torsion spring at a shear rate of 511 1/s, and at a temperature of 77 °F (25 °C) and a pressure of 1 atmosphere. For reference, the viscosity of pure water is about 1 cP.

A substance is considered to be a fluid if it has an apparent viscosity less than 5,000 cP (independent of any gel characteristic).

*Biodegradability*

Biodegradable means the process by which complex molecules are broken down by micro-organisms to produce simpler compounds. Biodegradation can be either aerobic (with oxygen) or anaerobic (without oxygen). The potential for biodegradation is commonly measured on well fluids or their components to ensure that they do not persist in the environment. A variety of tests exist to assess biodegradation.

As used herein, a substance is considered "biodegradable" if the substance passes a ready biodegradability test or an inherent biodegradability test. It is preferred that a substance is first tested for ready biodegradability, and only if the substance does not pass at least one of the ready biodegradability tests then the substance is tested for inherent biodegradability.

In accordance with Organisation for Economic Co-operation and Development (OECD) guidelines, the following six tests permit the screening of chemicals for ready biodegradability. As used herein, a substance showing more than 60% biodegradability in 28 days according to any one of the six ready biodegradability tests is considered a pass level for classifying it as "readily biodegradable," and it may be assumed that the substance will undergo rapid and ultimate degradation in the environment. The six ready biodegradability tests are: (1) 301A: DOC Die-Away; (2) 301B: CO2 Evolution (Modified Sturm Test); (3) 301C: MITI (I) (Ministry of International Trade and Industry, Japan); (4) 301D: Closed Bottle; (5) 301E: Modified OECD Screening; and (6) 301F: Manometric Respirometry. The six ready biodegradability tests are described below.

For the 301A test, a measured volume of inoculated mineral medium, containing 10 mg to 40 mg dissolved organic carbon per liter (DOC/l) from the substance as the nominal sole source of organic carbon, is aerated in the dark or diffuse light at 22 ± 2 °C. Degradation is followed by DOC analysis at frequent intervals over a 28-day period. The degree of biodegradation is calculated by expressing the concentration of DOC removed (corrected for that in the blank inoculum control) as a percentage of the concentration initially present. Primary biodegradation may also be calculated from supplemental chemical analysis for parent compound made at the beginning and end of incubation.

For the 301B test, a measured volume of inoculated mineral medium, containing 10 mg to 20 mg DOC or total organic carbon per liter from the substance as the nominal sole source of organic carbon is aerated by the passage of carbon dioxide-free air at a controlled rate in the dark or in diffuse light. Degradation is followed over 28 days by determining the carbon dioxide produced. The $CO_2$ is trapped in barium or sodium hydroxide and is measured by titration of the residual hydroxide or as inorganic carbon. The amount of carbon dioxide produced from the test substance (corrected for that derived from the blank inoculum) is expressed as a percentage of $ThCO_2$. The degree of biodegradation may also be calculated from supplemental DOC analysis made at the beginning and end of incubation.

For the 301C test, the oxygen uptake by a stirred solution, or suspension, of the substance in a mineral medium, inoculated with specially grown, unadapted micro-organisms, is measured automatically over a period of 28 days in a darkened, enclosed respirometer at 25 +/- 1 °C. Evolved carbon dioxide is absorbed by soda lime. Biodegradation is expressed as the percentage oxygen uptake (corrected for blank uptake) of the theoretical uptake (ThOD). The percentage primary biodegradation is also calculated from supplemental specific chemical analysis made at the beginning and end of incubation, and optionally ultimate biodegradation by DOC analysis.

For the 301D test, a solution of the substance in mineral medium, usually at 2-5 milligrams per liter (mg/l), is inoculated with a relatively small number of micro-organisms from a mixed population and kept in completely full, closed bottles in the dark at constant temperature. Degradation is followed by analysis of dissolved oxygen over a 28 day period. The amount of oxygen taken up by the microbial population during biodegradation of the test substance, corrected for uptake by the blank inoculum run in parallel, is expressed as a percentage of ThOD or, less satisfactorily COD.

For the 301E test, a measured volume of mineral medium containing 10 to 40 mg DOC/l of the substance as the nominal sole source of organic carbon is inoculated with 0.5 ml effluent per liter of medium. The mixture is aerated in the dark or diffused light at 22 + 2 °C. Degradation is followed by DOC analysis at frequent intervals over a 28 day period. The degree of biodegradation is calculated by expressing the concentration of DOC removed (corrected for that in the blank inoculums control) as a percentage of the concentration initially present. Primary biodegradation may also be calculated from supplemental chemical analysis for the parent compound made at the beginning and end of incubation.

For the 301F test, a measured volume of inoculated mineral medium, containing 100 mg of the substance per liter giving at least 50 to 100 mg ThOD/l as the nominal sole source of organic carbon, is stirred in a closed flask at a constant temperature (+ 1°C or closer) for up to 28 days. The consumption of oxygen is determined either by measuring the quantity of oxygen (produced electrolytically) required to maintain constant gas volume in the respirometer flask or from the change in volume or pressure (or a combination of the two) in the apparatus. Evolved carbon dioxide is absorbed in a solution of potassium hydroxide or another suitable absorbent. The amount of oxygen taken up by the microbial population during biodegradation of the test substance (corrected for uptake by blank inoculum, run in parallel) is expressed as a percentage of ThOD or, less satisfactorily, COD. Optionally, primary biodegradation may also be calculated from supplemental specific chemical analysis made at the beginning and end of incubation, and ultimate biodegradation by DOC analysis.

In accordance with OECD guidelines, the following three tests permit the testing of chemicals for inherent biodegradability. As used herein, a substance with a biodegradation or biodegradation rate of >20% is regarded as "inherently primary biodegradable." A substance with a biodegradation or biodegradation rate of >70% is regarded as "inherently ultimate biodegradable." As used herein, a substance passes the inherent biodegradability test if the substance is either regarded as inherently primary biodegradable or inherently ultimate biodegradable when tested according to any one of three inherent biodegradability tests. The three tests are: (1) 302A: 1981 Modified SCAS Test; (2) 302B: 1992 Zahn-Wellens Test; and (3) 302C: 1981 Modified MITI Test. Inherent biodegradability refers to tests which allow prolonged exposure of the test compound to microorganisms, a more favorable test compound to biomass ratio, and chemical or other conditions which favor biodegradation. The three inherent biodegradability tests are described below.

For the 302A test, activated sludge from a sewage treatment plant is placed in an aeration (SCAS) unit. The substance and settled domestic sewage are added, and the mixture is aerated for 23 hours. The aeration is then stopped, the sludge allowed to settle and the supernatant liquor is removed. The sludge remaining in the aeration chamber is then mixed with a further aliquot of the substance and sewage and the cycle is repeated. Biodegradation is established by determination of the dissolved organic carbon content of the supernatant liquor. This value is compared with that found for the liquor obtained from a control tube dosed with settled sewage only.

For the 302B test, a mixture containing the substance, mineral nutrients, and a relatively large amount of activated sludge in aqueous medium is agitated and aerated at 20 °C to 25 °C in the dark or in diffuse light for up to 28 days. A blank control, containing activated sludge and mineral nutrients but no substance, is run in parallel. The biodegradation process is monitored by determination of DOC (or COD) in filtered samples taken at daily or other time intervals. The ratio of eliminated DOC (or COD), corrected for the blank, after each time interval, to the initial DOC value is expressed as the percentage biodegradation at the sampling time. The percentage biodegradation is plotted against time to give the biodegradation curve.

For the 302C test, an automated closed-system oxygen consumption measuring apparatus (BOD-meter) is used. The substance to be tested is inoculated in the testing vessels with micro-organisms. During the test period, the biochemical oxygen demand is measured continuously by means of a BOD-meter. Biodegradability is calculated on the basis of BOD and supplemental chemical analysis, such as measurement of the dissolved organic carbon concentration, concentration of residual chemicals, etc.

*General Measurement Terms*

Unless otherwise specified or unless the context otherwise clearly requires, any ratio or percentage means by weight.

Unless otherwise specified or unless the context otherwise clearly requires, the phrase "by weight of the water" means the weight of the water of the continuous phase of the fluid without the weight of any viscosity-increasing agent, dissolved salt, suspended particulate, or other materials or additives that may be present in the water.

As used herein, "%wt/vol" means the mass-volume percentage, sometimes referred to as weight-volume percentage or percent weight per volume and often abbreviated as % m/v or % w/v, which describes the mass of the solute in g per 100 mL of the liquid. Mass-volume percentage is often used for solutions made from a solid solute dissolved in a liquid. For example, a 40% w/v sugar solution contains 40 g of sugar per 100 mL of liquid.

If there is any difference between U.S. or Imperial units, U.S. units are intended. For example, "gal/Mgal" means U.S. gallons per thousand U.S. gallons.

Unless otherwise specified, mesh sizes are in U.S. Standard Mesh.

The micrometer ($\mu$m) may sometimes be referred to herein as a micron.

## General Description

There have been various corrosion inhibitors and intensifiers developed to minimize corrosion of metal tubulars which occurs due to acid treatments commonly used in oilfield operations. Acid treatments involve mineral acids (such as hydrochloric acids commonly in a concentration of about 7.5% to about 15%) or organic acids (such as acetic acids or formic acids). Corrosion tendencies and rates using mineral acids are higher than for organic acids. Corrosion rates using organic acids are relatively lower, but not negligible. In addition, corrosion rates tend to increase substantially at elevated temperatures.

Use of chemical corrosion inhibitors is quite common in production and processing operations. Depending on the acids used, different corrosion inhibitors have been developed and added to well fluids or pipeline fluids to minimize the corrosion and hence protect and enhance the life of metal tubulars. Existing corrosion inhibitors are classified as either strong mineral acid (e.g., HCl) corrosion inhibitors or organic acid inhibitors. This is due to the difference in mechanism of inhibition. Particularly challenging is the development of new chemistries, which maintain good protection of materials under a variety of conditions while being environmentally acceptable.

It has been discovered that Withania somnifera extract has excellent corrosion inhibition properties in mineral acid fluids (such as hydrochloric acid) or in organic acids (such as formic acid and acetic acid) fluids on carbon steel, including at high concentrations of such acids or at high temperatures up to at least 135 °C (275 °F).

Disclosed herein is a method of treating a portion of a well or a pipeline with a fluid comprising an aqueous acidic phase is provided, the method comprising the steps of: (A) forming the fluid comprising an aqueous acidic phase, the fluid additionally comprising a material selected from the group consisting of: a material of a plant in the Solanaceae family, an extract of a material of a plant in the Solanaceae family, a withanolide, a source of a withanolide, a withanolide derivative, a source of a withanolide derivative, and any combination thereof; and (B) introducing the fluid into the portion of the well or pipeline; wherein the fluid contacts carbon steel in the well or pipeline.

Disclosed herein is a method of inhibiting corrosion of carbon steel to be contacted with a fluid comprising an aqueous acidic phase is provided, the method comprising the steps of: (A) forming the fluid comprising an aqueous acidic phase, the fluid additionally comprising a material selected from the group consisting of: a material of a plant in the Solanaceae family, an extract of a material of a plant in the Solanaceae family, a withanolide, a source of a withanolide, a withanolide derivative, a source of a withanolide derivative, and any combination thereof; and (B) contacting the carbon steel with the fluid.

The present invention relates to method of contacting carbon steel with a fluid comprising an aqueous acidic phase is provided, the method comprising the step of: including in the fluid Withania somnifera.

Such methods have wide application in various kinds of operations involved in the production or pipeline transportation of oil and gas, such as acid stimulation in a well or remedial treatment in a pipeline.

Withania somnifera is used to provide corrosion inhibition in mineral acids or in organic acids, which is a distinct advantage.

For example, as discussed in more detail below, tests conducted with Withania somnifera extract in 15% HCl acid recipes resulted in a corrosion loss of only 1.74 Pa (0.0364 lb/ft$^2$) at 120 °C (250 °F), which is significantly lower than the acceptable maximum value of 2.4 Pa (0.05 lb/ft$^2$).

Tests conducted with Withania somnifera extract in the organic acid recipes prepared in brine resulted in a corrosion loss of only 0.004 lb/ft$^2$ at 93 °C (200 °F), which is marginal and significantly lower than the acceptable maximum value of 2.4 Pa (0.05 lb/ft$^2$). At a high temperature of 135 °C (275 °F), corrosion loss is 1.29 Pa (0.027 lb/ft$^2$), which is below the acceptable maximum value.

Extract of Withania somnifera is commercially and economically available, for example, in India.

Withania somnifera extract is routinely used for medicinal purposes.

The extract is compatible with aqueous acid formulations commonly used in well fluids or pipeline fluids.

Further, both the solid powder and the liquid extract being natural compounds are extremely safe to handle during transportation and use at the field locations. There are no reported values of flammability, reactivity and hence is not a health or environmental hazard.

Hence, the extract of Withania somnifera, either in solid powder or aqueous liquid form, can be used for application as a corrosion inhibitor in acid treatments worldwide. The use of extract of Withania somnifera as a corrosion inhibitor can satisfy the long pending requirements of North Sea oil operations. The present invention provides a very simple effective natural and environmentally green product to inhibit corrosion in different types of acids.

In view of the points highlighted above, Withania somnifera extract can serve as an excellent choice for a corrosion inhibitor in mineral acids as well as organic acids and also comply with all health, safety and environment standards.

## Withania Somnifera, Family Solanaceae, Extracts, and Withanolides

Withania somnifera, also known as Ashwagandha in ayurvedic medicine, is a short shrub which grows in all dry parts and sub-tropical parts of India, South Africa, Congo, Egypt, Morocco, Jordan and Afghanistan. The naturally occurring plant products are eco-friendly, compatible, nonpolluting, easily available, biodegradable and economic to be used as corrosion inhibitors.

Biologically, Withania somnifera is classified as follows: Kingdom: Plantae; Subkingdom: Tracheobionta; Division: Magnoliophyta; Class: Magnoliopsida; Subclass: Asteridae; Order: Solanales; Family: Solanaceae; Subfamily: Asteroideae; Genus: Withania; Species: Withania somnifera.

The powder of Withania somnifera is extracted twice (from the roots of the plant), once with organic solvents and once with water so as to extract both solvent and water soluble components. Then these extracts are evaporated to remove solvents (organic and water). The thick slurry obtained after evaporation from these two stages is mixed and dissolved in some water. A small amount of glycerol or sorbitol is added to this mixture to make the solution soluble or dispersible in water.

The extract of Withania somnifera is believed to contain mostly withanolides (also known as steroidal lactones). Withanolides are produced via oxidation of steroids. Withaferin A, the first withanolide to be isolated, was found in Withania somnifera. Structurally, withanolides consist of a $C_{28}$ steroid backbone bound to a six-membered lactone ring. For example, steroidal lactones can be ergostane type steroids with a $C_{28}$ basic skeleton with a side chain of $C_9$ units of which a six-membered lactone ring is included. Withanolides include a group of at least 300 naturally occurring chemical compounds. Withanolides occur as secondary metabolites primarily in genera of the Nightshade family.

In addition to withanolides, Withania somnifera extract is believed to contain some alkaloids. Withanolides have oxygen atoms and alkaloids have N and S atoms. It is believed that can any of these withanolide or alkaloid molecules can be adsorbed on a carbon steel surface. Without being limited by any theory, it is believed that this adsorption can block the discharge of $H^+$ and dissolution of metal ions. According to the invention, it is believed that any of the withanolides or alkaloids that can be extracted from Withania somnifera would function as a corrosion inhibitor for carbon steel.

Genera within the Solanaceae (nightshade) family that have been found to produce withanolides include the following: Datura, Dunalia, Iochroma, Lycium, Nicandra, Physalis, Salpichroa, Solanum, Withania, and Jaborosa. The genus Withania is further organized into 65 species, subspecies, varieties, forms, and cultivars. Two of the species, W. somnifera (also known as Ashwagandha) and W. coagulans (also known as Ashutosh booti), are economically significant, and are cultivated in several regions for their medicinal uses. All genera from the Family Solanaceae that produce withanolides are expected to exhibit the corrosion inhibition properties demonstrated by Withania somnifera.

Accordingly, it is contemplated that any of the plants of the Solanaceae (nightshade) family would be useful as a corrosion inhibitor for carbon steel.

Based on this discovery that Withania somnifera extract is an effective corrosion inhibitor for carbon steel, it is contemplated that it may not be necessary to extract from the plant prior to use as a corrosion inhibitor. For example, the plant material is expected to release at least some of the active corrosion inhibitor into the fluid, especially if used in the fluid at an elevated temperature (above Standard Laboratory Conditions up to as high as about 150 °C (300 °F)). Accordingly, for example, a material of any of the plants of the Solanaceae (nightshade) family, are contemplated by this invention. It is contemplated that such a material be in the form of a ground or powdered plant material. In addition, it is believed the withanolides are formed primarily in the roots of such plants, and, accordingly, material from the roots is preferred.

In addition, it is contemplated that other sources of withanolides, including synthetic withanolides, would be suitable for use according to the invention. Natural plant sources of withanolides are expected to be cheaper than synthetic sources, however.

## Corrosion and Inhibition

Corrosion of metals can occur anywhere in an oil or gas production system, such as in the downhole tubulars, equipment, and tools of a well, in surface lines and equipment, or transportation pipelines and equipment.

In general, "corrosion" is the loss of metal due to chemical or electrochemical reactions, which could eventually destroy a structure. The corrosion rate will vary with time depending on the particular conditions to which a metal is exposed, such as the amount of water, pH, other chemicals, temperature, and pressure. Examples of common types of corrosion include, but are not limited to, the rusting of metal, the dissolution of a metal in an acidic solution, oxidation of a metal, chemical attack of a metal, electrochemical attack of a metal, and patina development on the surface of a metal.

Even weakly acidic fluids can be problematic in that they can cause corrosion of metals. As used herein with reference to the problem of corrosion, "acid" or "acidity" refers to a Bronsted-Lowry acid or acidity.

As used herein, the term "inhibit" or "inhibitor" refers to slowing down or lessening the tendency of a phenomenon (e.g., corrosion) to occur or the degree to which that phenomenon occurs. The term "inhibit" or "inhibitor" does not imply any particular mechanism, or degree of inhibition.

Accordingly, the term "corrosion inhibitor" means a material that has the property of reducing, slowing down, or lessening the tendency to corrosion.

When included, a corrosion inhibitor is preferably in a concentration of at least 0.1% by weight of a fluid. More preferably, the corrosion inhibitor is in a concentration in the range of 0.1% to 20% by weight of the fluid.

A corrosion inhibitor intensifier enhances the effectiveness of a corrosion inhibitor over the effectiveness of the corrosion inhibitor without the corrosion inhibitor intensifier. According to a preferred embodiment of the invention, the corrosion inhibitor intensifier is selected from the group consisting of: formic acid and potassium iodide.

The corrosion inhibitor intensifier is preferably in a concentration of at least 0.1% by weight of the fluid. More preferably, the corrosion inhibitor intensifier is in a concentration in the range of 0.1 % to 20% by weight of the fluid.

## Theoretical Discussion

*Mineral Acids and Organic Acids*

Strongly acidic solutions tend to be more corrosive to metals.

**EP 2 912 212 B1**

The pH value represents the acidity of a solution. The potential of hydrogen (pH) is defined as the negative logarithm to the base 10 of the hydrogen concentration, represented as [H+] in moles/liter.

$$pH = -\log_{10}[H^+]$$

Mineral acids tend to dissociate in water more easily than organic acids, to produce H+ ions and decrease the pH of the solution. Organic acids tend to dissociate more slowly than mineral acids and less completely.

Relative acid strengths for Bronsted-Lowry acids are expressed by the dissociation constant (pKa). A given acid will give up its proton to the base of an acid with a higher pKa value. The bases of a given acid will deprotonate an acid with a lower pKa value. In case there is more than one acid functionality for a chemical, "pKa(1)" makes it clear that the dissociation constant relates to the first dissociation.

The pKa of acids plays important role in above activities as shown in **Table 1.**

**Table 1**

|  | Acid | Base | pKa(1) |
|---|---|---|---|
| **Strong Acids In Water** | $HClO_4$ | $ClO_4^-$ | -10 |
|  | HI | $I^-$ | -10 |
|  | $H_2SO_4$ | $HSO_4^-$ | -10 |
|  | HBr | $Br^-$ | -9 |
|  | HCl | $Cl^-$ | -7 |
|  | $HNO_3$ | $NO_3^-$ | -2 |
|  | $H_3O^+$ | $H_2O$ | -1.74 |
| **Weak Acids In Water** | $CCl_3CO_2H$ | $CCl_3CO_2^-$ | 0.52 |
|  | $HSO_4^-$ | $SO_4^{-2}$ | 1.99 |
|  | $H_3PO_4$ | $H_2PO_4^-$ | 2.12 |
|  | $CH_2ClCO_2H$ | $CH_2ClCO_2^-$ | 2.85 |
|  | HF | $F^-$ | 3.17 |
|  | $HNO_2$ | $NO_2^-$ | 3.3 |
|  | $CH_3CO_2H$ | $CH_3CO_2^-$ | 4.75 |
|  | $C_5H_5NH^+$ | $C_5H_5N$ | 5.25 |
|  | $H_2CO_3$ | $HCO_3^-$ | 6.35 |
|  | $H_2S$ | $HS^-$ | 7.0 |
|  | $NH_4^+$ | $NH_3$ | 9.24 |
|  | $HCO_3^-$ | $CO_3^{-2}$ | 10.33 |
|  | $CH_3NH_3^+$ | $CH_3NH_2$ | 10.56 |
|  | $H_2O$ | $OH^-$ | 15.74 |

Water ($H_2O$) is the base of the hydronium ion, $H_3O^+$, which has a pka - 1.74. An acid having a pKa less than that of hydronium ion, pKa -1.74, is considered a strong acid.

For example, hydrochloric acid (HCl) has a pKa -7, which is greater than the pKa of the hydronium ion, pKa -1.74. This means that HCl will give up its protons to water essentially completely to form the $H_3O^+$ cation. For this reason, HCl is classified as a strong acid in water. One can assume that all of the HCl in a water solution is 100% dissociated, meaning that both the hydronium ion concentration and the chloride ion concentration correspond directly to the amount of added HCl.

Acetic acid ($CH_3CO_2H$) has a pKa of 4.75, greater than that of the hydronium ion, but less than that of water itself, 15.74. This means that acetic acid can dissociate in water, but only to a small extent. Thus, acetic acid is classified

14

as a weak acid.

*Acid Corrosion of Metals*

As mineral acids are stronger acids than organic acids, mineral acids tend to be more corrosive than organic acids. In addition, at elevated temperatures the dissociation rate increases significantly, and hence, all else being equal, an acid becomes more corrosive.

The mechanism of corrosion for both cases (mineral acids and organic acids) is expected to be same, the only difference is in the rate of corrosion. The rate of corrosion will depend upon the availability of $H^+$ ion released from acid. Mineral acids dissociate completely to give more $H^+$ ions as compared to organic acids.

*Aluminum Corrosion Resistance*

Aluminum is a chemical element in the boron group with symbol Al and atomic number 13. It is silvery white. Aluminum is the third most abundant element (after oxygen and silicon), and the most abundant metal, in the Earth's crust. It makes up about 8% by weight of the Earth's solid surface. Aluminum metal is so chemically reactive that native specimens are rare and limited to extreme reducing environments. Instead, it is found combined in over 270 different minerals. The chief ore of aluminum is bauxite.

Aluminum metal is essentially 100% aluminum. Aluminum and its alloys are generally not sufficiently strong for use in oilfield applications. In addition, aluminum and its alloys are susceptible to hydrogen embrittlement.

Aluminum is remarkable for the metal's low density and for its ability to resist corrosion due to the phenomenon of passivation. Although aluminum is an active metal, as indicated in the electromotive force series, it is resistant to corrosion in many environments.

Without being limited by any theory, it is believed that the corrosion resistance of aluminum results from the formation of a passive oxide film, which is 0.005 to 0.010 micron thick in air. A thin protective film is also formed in water at ambient temperatures. As temperature increases, the film becomes thicker and more protective. This film is stable in aqueous media when the pH is between about 4.0 and 8.5. The oxide film is naturally self-renewing and accidental abrasion or other mechanical damage of the surface film is rapidly repaired. However, the protective film does not form in water or steam above approximately 446 °F (230 °C).

Aluminum is an amphoteric metal, i.e., it corrodes under both acid and alkaline conditions. The acidity or alkalinity of the environment significantly affects the corrosion behavior of aluminum alloys. At lower and higher pH, aluminum is more likely to corrode, but by no means always does so.

In acidic conditions, the aluminum oxide is generally more rapidly attacked than aluminum itself, and more general corrosion should result as the oxide is first attacked, exposing the aluminum metal. Acid waters containing chlorides are especially corrosive to aluminum. Although sulfate-containing waters of low pH are also corrosive to aluminum, they are less corrosive than chloride-containing acids. Exceptions are acetic acid, nitric acid above 80% concentration by weight, and sulfuric acid of 98 to 100% concentration by weight.

Accordingly, aluminum exhibits good resistance to nearly all concentrations of acetic acid at room temperature and has been used extensively for its storage and shipment. For example, aluminum is fairly resistant to 97 and 99% acetic acid to the boiling point, but is attacked very rapidly in concentrations nearly 100% or containing excess $(CH3CO)_2O$. Bruce D. Craig, "Hand Book of Corrosion Data," 2nd edition, Page 88.

When aluminum is exposed to alkaline conditions corrosion may occur, and when the oxide film is perforated locally, accelerated attack occurs because aluminum is attacked more rapidly than its oxide under alkaline conditions. The result of this kind of attack is pitting of the metal. An exception to corrosion under alkaline conditions is to ammonium hydroxide above about 30% concentration by weight.

Aluminum and its alloys are resistant to attack by most organic chemicals, but some organic chemicals will react with aluminum if they are free of water and at elevated temperatures, usually near their boiling points.

*Iron and Steel Corrosion*

Iron is a chemical element with the symbol Fe (from Latin: ferrum) and atomic number 26. It is a metal in the first transition series. It is the most common element (by mass) forming the planet Earth as a whole, forming much of Earth's outer and inner core. It is the fourth most common element in the Earth's crust. Iron exists in a wide range of oxidation states, -2 to +8, although +2 and +3 are the most common. Elemental iron is reactive to oxygen and water. Fresh iron surfaces appear lustrous silvery-gray, but oxidize in normal air to give iron oxides, also known as rust. Unlike many other metals which form passivating oxide layers, iron oxides occupy more volume than iron metal, and thus iron oxides flake off and expose fresh surfaces for corrosion.

Pure iron is softer than aluminum, but iron is significantly hardened and strengthened by impurities from the smelting process, such as carbon. A certain proportion of carbon (between 0.2% and 2.1%) produces steel, which may be up to 1,000 times harder than pure iron. Crude iron metal is produced in blast furnaces, where ore is reduced by coke to pig iron, which has high carbon content. Further refinement with oxygen reduces the carbon content to the correct proportion to make steel.

Carbon steel is steel where the main interstitial alloying constituent is carbon. As the carbon content rises, steel has the ability to become harder and stronger through heat treating, but this also makes it less ductile. Regardless of the heat treatment, higher carbon content reduces weldability. In carbon steels, the higher carbon content lowers the melting point. The typical composition of carbon steel is an alloy of iron containing no more than 2.0 wt% of carbon.

The term "carbon steel" may also be used in reference to steel which is not stainless steel; in this use carbon steel may include alloy steels.

The American Iron and Steel Institute (AISI) defines carbon steel as the following: "Steel is considered to be carbon steel when no minimum content is specified or required for chromium, cobalt, molybdenum, nickel, niobium, titanium, tungsten, vanadium or zirconium, or any other element to be added to obtain a desired alloying effect; when the specified minimum for copper does not exceed 1.04 percent; or when the maximum content specified for any of the following elements does not exceed the percentages noted: manganese 1.65, silicon 0.60, copper 0.60."

Generally speaking, carbon steels contain up to 2% total alloying elements and can be subdivided into low-carbon steels, medium-carbon steels, high-carbon steels, and ultrahigh-carbon steels. Low-carbon steels contain up to 0.30% C. Medium-carbon steels are similar to low-carbon steels except that the carbon ranges from 0.30 to 0.60% and the manganese from 0.60 to 1.65%. Ultrahigh-carbon steels are experimental alloys containing 1.25 to 2.0% C.

Steels and low carbon iron alloys with other metals (alloy steels) are by far the most common metals in industrial use, due to their great range of desirable properties and the abundance of iron. Steel is commonly used in oilfield and pipeline tubulars and equipment.

For example, carbon steel is usually used in tubes for the production of oil, for example "N-80", "J-55", or "P-110," having the following typical composition ranges, by weight: 0.20% to 0.45% C; 0.15% to 0.40% Si; 0.60% to 1.60% Mn; 0.03% maximum S; 0.03% maximum P; 1.60% maximum Cr; 0.50% maximum Ni; 0.70% maximum No; 0.25% maximum Cu; and balance Fe (greater than 94%).

Without being limited by any theory, it is believed the corrosion of steel is attributable to the reactivity of iron (Fe). Corrosion of iron alloys such as steel is expected to occur much faster and uninhibited compared to aluminum. Thus, iron and its alloys are much more susceptible to corrosion than aluminum in acidic solutions. For example, in contrast to aluminum, steel is attacked quite rapidly by all concentrations of acetic acid even at room temperature. Therefore, steel is normally unacceptable for use in acetic acid service. Bruce D. Craig, "Hand Book of Corrosion Data," 2nd edition, Page 88.

In the range of pH 4 to 10, the corrosion rate of iron or steel is relatively independent of the pH of the solution. In this pH range, the corrosion rate is governed largely by the rate at which oxygen reacts with absorbed atomic hydrogen, thereby depolarizing the surface and allowing the reduction reaction to continue.

For acidic pH values below 4, ferrous oxide (FeO) is soluble. Thus, the oxide dissolves as it is formed rather than depositing on the metal surface to form a film. In the absence of the protective oxide film, the metal surface is in direct contact with the acid solution, and the corrosion reaction proceeds at a greater rate than it does at higher pH values. It is also observed that hydrogen is produced in acid solutions below a pH of 4, indicating that the corrosion rate no longer depends entirely on depolarization by oxygen, but on a combination of the two factors (hydrogen evolution and depolarization).

For pH values above about 10, the corrosion rate is observed to fall as pH is increased. This is believed to be due to an increase in the rate of the reaction of oxygen with $Fe(OH)_2$ (hydrated FeO) in the oxide layer to form the more protective $Fe_2O_3$ (note that this effect is not observed in deaerated water at high temperatures).

As used herein, the term "carbon steel" does not include stainless steel. Stainless steel differs from carbon steel by amount of chromium present.

In metallurgy, stainless steel, also known as inox steel or inox from French "inoxydable," is defined as a steel alloy with a minimum of 11.5% chromium content by weight. Stainless steel does not corrode, rust, or stain with water as ordinary steel does, but despite the name it is not fully stain-proof, most notably under low oxygen, high salinity, or poor circulation environments. It is also called corrosion-resistant steel or CRES when the alloy type and grade are not detailed. There are different grades and surface finishes of stainless steel to suit the intended environment. Stainless steel is used where both the properties of steel and resistance to corrosion are required.

Stainless steel differs from carbon steel by the amount of chromium present. Unprotected carbon steel rusts readily when exposed to air and moisture. This iron oxide film (the rust) is active and accelerates corrosion by forming more iron oxide, and due to the dissimilar size of the iron and iron oxide molecules (iron oxide is larger) these tend to flake and fall away. Stainless steels contain sufficient chromium to form a passive film of chromium oxide, which prevents further surface corrosion and blocks corrosion from spreading into the internal material of the metal, and due to the similar size of the steel and oxide molecules they bond very strongly and remain attached to the surface. Passivation only occurs if the proportion of chromium is high enough and in the presence of oxygen.

*Corrosion Inhibition of Aluminum vs. Carbon Steel*

Without being limited by any theory, inhibitors that work on the polymer film-forming phenomenon are expected to work similar on metals such as aluminum or carbon steel. However, those that work on the adsorption phenomenon of inhibitor molecules on the surface of the metal are expected to have different inhibition efficiencies on aluminum and carbon steel because their adsorption efficiencies will depend upon the chemical nature of the metal.

*Withania Somnifera or Withanolides as Corrosion Inhibitor*

Due to the presence of heteroatoms in Withania somnifera extract (primarily comprising one or more withanolides), it is believed that the inhibition mechanism is based on the adsorption phenomenon.
Although Withania somnifera is known to be an inhibitor for aluminum at low concentrations of acid and under lower pressures and temperatures, it is surprising that it would work as a corrosion inhibitor for carbon steel, which has a much higher tendency to corrode compared to aluminum. It is unexpected that extract of Withania somnifera or other sources of withanolides would be useful as a corrosion inhibitor for carbon steel, especially in the cases of carbon steel exposed to higher concentrations of strong or weak acids or under higher pressure or temperature conditions, as may be required in a well or pipeline environment. Such properties are required, however, for an inhibitor used with carbon steel in the oil and gas industry and pipeline industry.
Withania somnifera is an example of a readily available plant source for one or more withanolides. As shown below, Withania somnifera can be used as a corrosion inhibitor for carbon steel, including in high concentrations of mineral acid or organic acid or at design pressures at least as high as 6.9 MPa (1,000 psi) and temperatures at least as high as 135 °C (275 °F).

## Fluids, Methods, and Applications

As discussed above, a method according to the invention includes contacting carbon steel with a fluid comprising an aqueous acidic phase. The method includes the step of including in the fluid Withania somnifera extract.
Carbon steel commonly used in wells or pipelines include, without limitation, J55 steel, N-80 steel, and P-110 steel.
In an embodiment of the invention, the fluid is a water-based fluid. It should be appreciated, however, that the fluid can be an emulsion for certain applications in a well or pipeline, either an oil-in-water emulsion or a water-in-oil emulsion. It should also be appreciated, that the fluid can include a suspended solid particulate, such as a proppant or gravel, which may be used with acidizing fluids in certain applications in a well, as known in the art.
In an embodiment, the aqueous acidic phase includes one or more water-soluble salts. Such salts can have various purposes in a well or pipeline fluid. For example, a salt can be used as a weighting agent. By way of another example, a salt can be used to help stabilize the rock of a subterranean formation when it contacts water. The salt can be dissolved in the water phase of a fluid. The water-soluble salt can be, for example, selected from the group consisting of alkali metal halides, such as KCl or NaCl, which are commonly used in well or pipeline fluids. Unfortunately, dissolved salts can also exacerbate corrosion of certain metals. Another commonly used salt used as a weighting agent is barium sulfate.
In an embodiment, the fluid can be viscosified for various purposes, such as to help suspend a particulate or control or divert penetration of an acidizing fluid into the rock of a subterranean formation, according to techniques known in the art. For example, in an embodiment, the aqueous fluid is viscosified with a viscosity-increasing agent, such as a water-soluble polysaccharide or viscoelastic surfactant, according to such techniques known in the art. A well fluid for use in a method according to the invention can include a crosslinker for a water-soluble polysaccharide or water-soluble polysaccharide derivative.
In an embodiment, the aqueous acidic phase is acidified with one or more Bronsted-Lowry acids. For example, the acid can be selected from the group consisting of: hydrochloric acid, hydrofluoric acid, formic acid, acetic acid, citric acid, and any mixture thereof. Preferably, the acid present in the aqueous acid solution in a concentration in the range of from about 2% to about 35% by weight of water. More preferably, the acid is in a concentration of at least 7% by weight of the water up to about 28% by weight of the water.
In an embodiment, the aqueous acidic phase includes a mineral acid having a pKa(1) less than -1.74. In another embodiment, the aqueous acidic phase comprises an organic acid having a pKa(1) less than 5.
In an embodiment, the aqueous acidic phase has a pH less than 4.
In an embodiment, the material of a plant in the Solanaceae family is of the root of the plant.
In another embodiment, the plant in the Solanaceae family is also selected for producing a withanolide. For example, in an embodiment, the plant in the Solanaceae family is also in a genera selected from the group consisting of: Datura, Dunalia, Iochroma, Lycium, Nicandra, Physalis, Salpichroa, Solanum, Withania, and Jaborosa. Preferably, the plant in the Solanaceae family is also in the genera Withania.

In an embodiment, an extract is in particulate form when being added to the fluid. For example, the extract can be in the form of a powder. In another embodiment, the extract is in a liquid solution when being added to the fluid.

For example, a withanolide used in the methods according to the invention can be extracted from plant material containing the withanolide. It is believed, however, that it is not necessary to extract the withanolide from the plant material. For example, a root of the Family Solanaceae of plants that includes one or more withanolides, can be used as a source of the corrosion inhibitor. The other materials of the root are not expected to interfere in the applications of the methods according to the inventions. It may be, however, that other materials of the plant or extract are corrosion inhibitors or corrosion inhibitor intensifiers for carbon steel.

Preferably, the withanolide or source of withanolide is in the form of a particulate prior to the step of combining with the aqueous acid solution. Most preferably, the size of the particulate of the corrosion inhibitor is in the range of a powder. The particulate may be suspended in a liquid for ease of handling and mixing prior to the step of combining. For example, the corrosion inhibitor can be suspended in an oil phase.

It is to be understood that the well fluid can be, for example, in the form of a suspension or an emulsion during the step of contacting.

Preferably, the material used as a corrosion inhibitor is biodegradable according to a test for biodegradability.

In an embodiment, the material is a concentration in the range of from about 0.01% wt/vol to about 20% wt/vol of the aqueous acid solution. More preferably, the withanolide is combined with the aqueous acid solution in an effective amount to provide at least measurable corrosion inhibition for the metal to be contacted by the well fluid in the well under the design conditions of contacting.

In an embodiment, the fluid additionally comprises a corrosion inhibitor intensifier. For example, the fluid can additionally comprise potassium iodide.

In an embodiment, the method has a design temperature for contacting of the carbon steel and the fluid is at least 90 °C (200 °F). In another embodiment, a design temperature for contacting of the carbon steel and the fluid is less than 150 °C (300 °F).

A well fluid for use in a method according to the invention can include, for example, one or more additives selected from the group consisting of inorganic water-soluble salts, weighting agents, surfactants, surface modifying agents, gas, nitrogen, carbon dioxide, foamers, bases, buffers, alcohols, fluid-loss control additives, conventional corrosion inhibitors, corrosion inhibitor intensifiers, scale inhibitors, catalysts, clay control agents, biocides, friction reducers, antifoam agents, bridging agents, dispersants, flocculants, $H_2S$ scavengers, $CO_2$ scavengers, oxygen scavengers, lubricants, viscosifiers, oxidizers, breakers, breaker aids, relative permeability modifiers, particulate materials, proppant particulates, resins, tackifying agents, wetting agents, coating enhancement agents, and any combination thereof.

The method can further include the step of flowing back at least some of the well fluid from the well or pipeline after contacting the carbon steel.

The methods can be used for various types of well or pipeline fluids comprising an aqueous acid solution and associated methods. For example, the methods have particular application with matrix acidizing or acid fracturing fluids, which are strongly acidic. The methods also have particular application in hydrocarbon transportation pipelines that use acidic fluids.

According to another embodiment of the invention, the method includes the steps of: forming a fluid according to the invention; and introducing the treatment fluid into a well or pipeline.

A well fluid can be prepared at the job site, prepared at a plant or facility prior to use, or certain components of the well fluid can be pre-mixed prior to use and then transported to the job site. Certain components of the well fluid may be provided as a "dry mix" to be combined with fluid or other components prior to or during introducing the well fluid into the well.

In certain embodiments, the preparation of a well fluid can be done at the job site in a method characterized as being performed "on the fly." The term "on-the-fly" is used herein to include methods of combining two or more components wherein a flowing stream of one element is continuously introduced into flowing stream of another component so that the streams are combined and mixed while continuing to flow as a single stream as part of the on-going treatment. Such mixing can also be described as "real-time" mixing.

Often the step of introducing a well fluid into a well is within a relatively short period after forming the well fluid, for example, within 30 minutes to one hour. More preferably, the step of delivering the well fluid is immediately after the step of forming the well fluid, which is "on the fly."

It should be understood that the step of delivering a well fluid into a well can advantageously include the use of one or more fluid pumps.

After the acid is spent for its intended purpose, the fluid can be flowed back from the well or out of the pipeline.

## Examples

To facilitate a better understanding of the present invention, the following examples of certain aspects of some embodiments are given. In no way should the following examples be read to limit, or define, the entire scope of the invention.

*Static Corrosion Weight-Loss Test Procedure*

Static weight-loss corrosion tests were performed as follows. High pressure, high temperature ("HPHT") static weight loss corrosion testing was performed in individual HASTELLOY™ model B-2 autoclaves. Weighing of the metal specimens (sometimes referred to in the art as "coupons") was on a balance accurate to 0.001 gram (g).

The metal alloy specimens were cleaned by degreasing with acetone followed by removal of the surface scale by lightly bead blasting the surface. Each specimen of approximate surface area 28.4 $cm^2$ (4.4 $in^2$) was accurately measured in square inches and accurately weighed in grams.

Test fluids were prepared by mixing the desired components.

100 ml of each test fluid was placed into a glass cell, followed by introduction of a metal specimen. After capping the cell, the container with the test fluid and the alloy specimen were placed in the autoclave. The autoclave was filled with a heat transfer medium and pressurized to a test pressure of 6.9 MPa (1,000 psi) with nitrogen gas. Heating was accomplished using EUROTHERM™ controllers that adjust a specific heating ramp up to the test temperature via a computer control. Pressure was maintained using a back pressure regulator assembly which allows for automatic bleed-off of excess pressure developed during heating and corrosion. Test times were contact times and included heat up and cool down times. The test times were the total contact time of the test fluid on the specimen.

At the end of the test time, the alloy test specimen was removed from the test fluid, then cleaned with acetone and a light brushing to remove surface deposits, and finally dried and weighed.

The corrosion loss in units of lb/ft$^2$ was calculated using the following equations:

$$\text{Weight loss in g} = (\text{Wt.B g} - \text{Wt.A g})$$

$$\text{Weight loss (grams)} \times [144 \text{ in}^2/\text{ft}^2 / (453.6 \text{ g/lb} \times \text{S.A. in}^2)]] = \text{corrosion loss lb/ft}^2$$

where "S.A. in$^2$" is the surface area of a coupon measured in square inches, "Wt.B" was the weight in grams of the coupon before testing, and where "Wt.A" is the weight in grams of the coupon after testing.

According to this method, the standard for an acceptable corrosion loss for carbon steel is less than or equal to 2.4 Pa (0.05 lb/ft$^2$) under the design conditions of acid and concentration and of fluid contact time at a specified temperature and pressure.

Experimental details, including test fluid compositions, type of metal alloy specimen, and the testing time and temperature, are discussed below.

*Corrosion Testing of Withania Somnifera Extract in Mineral Acid on Carbon Steel*

Static weight-loss corrosion tests were conducted regarding Withania somnifera extract (liquid) as a corrosion inhibitor in mineral acid fluids on specimens of carbon steel. Representative testing is shown in **Table 2,** below. The mineral acid was concentrated (15% by weight) hydrochloric acid (HCl). The test specimens used were of "N-80" steel.

A representative control test with 15% HCl fluid (without any Withania somnifera extract) on a test specimen of N-80 carbon steel for 6 hours at 135 °C (275 °F) gave an unacceptable corrosion loss of 38.1 Pa (0.7957 lb/ft$^2$).

Testing with Withania somnifera extract (liquid) in concentrated mineral acid (e.g., 15% HCl) demonstrated it can provide corrosion inhibition for carbon steel. The corrosion inhibiting effect of the Withania somnifera extract is improved when used in conjunction with an intensifier, such as potassium iodide or potassium iodide with formic acid. For example, as can be seen in **Table 2** below, at mineral acid concentrations of 15% HCl and at a temperature of 120 °C (250 °F) for 6 hours, the Withania somnifera extract (liquid) with an intensifier gives an acceptable corrosion loss for carbon steel of less than 2.4 Pa (0.05 lb/ft$^2$). In 15% HCl at higher temperatures, an intensifier may be required along with the Withania somnifera extract as inhibitor, to achieve acceptable corrosion loss values under such design conditions. The testing of **Table 2** shows that Withania somnifera extract in a concentrated mineral acid can provide corrosion inhibition for up to at least 6 hours and up to at least 135 °C (275 °F) for carbon steel.

Table 2

| Conc. of inhibitor (%v/v) | Conc. of intensifier | Conc. of acid(% by wt) | Temp. (°C) ((°F)) | Contact Time (hours) | Alloy | CorrosionLoss (Pa) (($lb/ft^2$)) | Pitting |
|---|---|---|---|---|---|---|---|
| NA | NA | 15% HCl | 135 (275) | 6 | N-80 | 38.1 (0.7957) | Yes |
| 5% | 100 lbs/Mgal potassium iodide | 15% HCl | 120 (250) | 6 | N-80 | 1.74 (0.0364) | None |
| 15% | 120 lbs/Mgal potassium iodide + 6 %v/v formic acid | 15% HCl | 135 (275) | 6 | N-80 | 3.73 (0.078) | None |
| 15% | 120 lbs/Mgal potassium iodide | 15% HCl | 150 (300) | 6 | N-80 | 12.7 (0.2657) | Yes |

*Corrosion Testing of Withania Somnifera Extract in Organic Acids on Carbon Steel*

Static weight-loss corrosion tests were conducted regarding Withania somnifera extract (powder) as a corrosion inhibitor in organic acid fluids on specimens of carbon steel. Representative testing is shown in **Table 3,** below. The organic acid was a mixture of (9% by volume) formic acid and (13% by volume) acetic acid. The test specimens used were of "N-80" steel.

A representative control test in an aqueous organic acid fluid (without any Withania somnifera extract) on a test specimen of N-80 carbon steel for 6 hours at 135 °C (275 °F) gave an unacceptable corrosion loss of 29.5 Pa (0.6165 $lb/ft^2$).

Tests conducted using Withania somnifera extract (powder form) with organic acid mixtures of 9% formic acid and 13% acetic acid prepared in 1.04 specific gravity NaCl brine, resulted in very low values of corrosion loss up to at least 135 °C (275 °F), much lower than the acceptable corrosion loss of less than 2.4 Pa (0.05 $lb/ft^2$). These tests were done with powdered sample of Withania somnifera.

Table 3

| Conc. of inhibitor (kg/ML) ((lb/Mgal)) | Conc. of intensifier potassium iodide (kg/ML) ((lb/Mgal)) | Conc. of acids (% by vol.) | Temp (°C) ((F)) | Contact Time (hours) | Alloy | Corrosion Loss (Pa) (($lb/ft^2$)) | Pitting |
|---|---|---|---|---|---|---|---|
| NA | NA | 9% Formic acid + 13% Acetic acid + 1.04 spg. NaCl brine | 135 (275) | 6 | N-80 | 29.5 (0.6165) | Yes |
| 6 (50) | 2.4 (20) | 9% Formic acid + 13% Acetic acid + 1.04 spg. NaCl brine | 90 (200) | 6 | N-80 | 0.19 (0.0040) | None |
| 6 (50) | 2.4 (20) | 9% Formic acid + 13% Acetic acid + 1.04 spg. NaCl brine | 110 (225) | 6 | N-80 | 0.23 (0.0048) | None |
| 6 (50) | 6 (50) | 9% Formic acid + 13% Acetic acid + 1.04 spg. NaCl brine | 120 (250) | 6 | N-80 | 0.94 (0.0196) | None |

(continued)

| Conc. of inhibitor (kg/ML) ((lb/Mgal)) | Conc. of intensifier potassium iodide (kg/ML) ((lb/Mgal)) | Conc. of acids (% by vol.) | Temp (°C) ((F)) | Contact Time (hours) | Alloy | Corrosion Loss (Pa) (lb/ft$^2$)) | Pitting |
|---|---|---|---|---|---|---|---|
| 9 (75) | 12 (100) | 9% Formic acid + 13% Acetic acid + 1.04 spg. NaCl brine | 135 (275) | 6 | N-80 | 1.29 (0.0270) | None |
| 9 (75) | 12 (100) | 9% Formic acid + 13% Acetic acid + 1.04 spg. NaCl brine | 150 (300) | 6 | N-80 | 13.5 (0.2813) | Yes |

The above data demonstrates the corrosion inhibition properties of Withania somnifera in mineral acids as well as organic acids.

Conclusion

Therefore, the present invention is well adapted to attain the ends and advantages mentioned as well as those that are inherent therein.

The particular embodiments disclosed above are illustrative only, as the present invention may be modified and practiced in different but equivalent manners apparent to those skilled in the art having the benefit of the teachings herein. It is, therefore, evident that the particular illustrative embodiments disclosed above may be altered or modified and all such variations are considered within the scope of the present invention.

The various elements or steps according to the disclosed elements or steps can be combined advantageously or practiced together in various combinations or subcombinations of elements or sequences of steps to increase the efficiency and benefits that can be obtained from the invention.

The invention illustratively disclosed herein suitably may be practiced in the absence of any element or step that is not specifically disclosed or claimed.

Furthermore, no limitations are intended to the details of construction, composition, design, or steps herein shown, other than as described in the claims.

**Claims**

1.  A method of contacting carbon steel with a fluid comprising an aqueous acidic phase, the method comprising the step of: including in the fluid Withania somnifera extract.

2.  The method according to claim **1,** wherein the fluid is a water-based fluid.

3.  The method according to claim **1,** wherein the aqueous acidic phase comprises a water-soluble salt, or wherein the aqueous acidic phase comprises one or more salts selected from the group consisting of alkali metal halides.

4.  The method according to claim **1,** wherein the aqueous acidic phase comprises an acid selected from the group consisting of: hydrochloric acid, hydrofluoric acid, formic acid, acetic acid, citric acid, and any mixture thereof present in the aqueous acid solution in a concentration in the range of from 2% to 35% by weight of water.

5.  The method according to claim **1,** wherein the aqueous acidic phase comprises a mineral acid having a pKa(1) less than -1.74, or wherein the aqueous acidic phase comprises an organic acid having a pKa(1) lesser than 5, or wherein the aqueous acidic phase has a pH less than 4.

6.  The method according to claim **1,** wherein the Withania somnifera extract is a concentration in the range of from 0.01% wt/vol to 20% wt/vol of the aqueous acid solution.

**7.** The method according to claim **1,** wherein the fluid additionally comprises a corrosion inhibitor intensifier, or wherein the fluid additionally comprises potassium iodide.

**8.** The method according to claim **1,** wherein a design temperature is at a temperature of greater than 93°C (200 °F).

**9.** The method according to claim **1,** wherein a design temperature for contacting of the carbon steel and the fluid is less than 150°C (300 °F).

**Patentansprüche**

**1.** Verfahren zum Kontaktieren von Kohlenstoffstahl mit einem Fluid umfassend eine wässrige saure Phase, wobei das Verfahren den folgenden Schritt umfasst: Aufnehmen des Extrakts von Withania somnifera in das Fluid.

**2.** Verfahren nach Anspruch 1, wobei das Fluid ein Fluid auf Wasserbasis ist.

**3.** Verfahren nach Anspruch 1, wobei die wässrige saure Phase ein wasserlösliches Salz umfasst oder wobei die wässrige saure Phase ein oder mehrere Salze umfasst, die aus der Gruppe ausgewählt sind, die aus Alkalimetallhalogeniden besteht.

**4.** Verfahren nach Anspruch 1, wobei die wässrige saure Phase eine Säure umfasst, die aus der Gruppe ausgewählt ist, die Folgendes umfasst: Chlorwasserstoffsäure, Fluorwasserstoffsäure, Methansäure, Ethansäure, Zitronensäure oder einer Mischung aus diesen, und die in der wässrigen sauren Lösung in einer Konzentration im Bereich von 2 bis 35 Gew.-% Wasser vorliegt.

**5.** Verfahren nach Anspruch 1, wobei die wässrige saure Phase eine anorganische Säure umfasst, die einen pKa(1)-Wert von weniger als -1,74 aufweist, oder wobei die wässrige saure Phase eine organische Säure umfasst, die einen pKa(1)-Wert von weniger als 5 aufweist, oder wobei die wässrige saure Phase einen pH-Wert von weniger als 4 aufweist.

**6.** Verfahren nach Anspruch 1, wobei der Extrakt von Withania somnifera eine Konzentration im Bereich von 0,01 Gewichts-Volumenprozent bis 20 Gewichts-Volumenprozent der wässrigen sauren Lösung ist.

**7.** Verfahren nach Anspruch 1, wobei das Fluid zusätzlich einen Korrosionshemmungsverstärker umfasst oder wobei das Fluid zusätzlich Kaliumiodid umfasst.

**8.** Verfahren nach Anspruch 1, wobei eine Auslegungstemperatur bei einer Temperatur von mehr als 93 °C (200 °F) liegt.

**9.** Verfahren nach Anspruch 1, wobei eine Auslegungstemperatur für das Kontaktieren des Kohlenstoffstahls und des Fluids weniger als 150 °C (300 °F) beträgt.

**Revendications**

**1.** Procédé de mise en contact d'acier au carbone avec un fluide comprenant une phase acide aqueuse, le procédé comprenant l'étape de : inclusion dans le fluide d'extrait de Withania somnifera.

**2.** Procédé selon la revendication 1, dans lequel le fluide est un fluide à base d'eau.

**3.** Procédé selon la revendication 1, dans lequel la phase acide aqueuse comprend un sel soluble dans l'eau, ou dans lequel la phase acide aqueuse comprend un ou plusieurs sels sélectionnés dans le groupe constitué d'halogénures de métal alcalin.

**4.** Procédé selon la revendication 1, dans lequel la phase acide aqueuse comprend un acide sélectionné dans le groupe constitué de : acide hydrochlorique, acide hydrofluorique, acide formique, acide acétique, acide citrique, et tout mélange de ceux-ci présent dans la solution acide aqueuse dans une concentration dans la plage allant de 2 % à 35 % par poids d'eau.

**5.** Procédé selon la revendication 1, dans lequel la phase acide aqueuse comprend un acide minéral ayant un pKa(1) inférieur à - 1,74, ou dans lequel la phase acide aqueuse comprend un acide organique ayant un pKa(1) inférieur à 5, ou dans lequel la phase acide aqueuse comprend a un pH inférieur à 4.

**6.** Procédé selon la revendication 1, dans lequel l'extrait de Withania somnifera est une concentration dans la plage allant de 0,01 % wt/vol à 20 % wt/vol de la solution acide aqueuse.

**7.** Procédé selon la revendication 1, dans lequel le fluide comprend en outre un intensificateur d'inhibiteur de corrosion, ou dans lequel le fluide comprend en outre de l'iodure de potassium.

**8.** Procédé selon la revendication 1, dans lequel une température de conception est à une température supérieure à 93°C (200°F).

**9.** Procédé selon la revendication 1, dans lequel une température de conception pour la mise en contact de l'acier au carbone et du fluide est inférieure à 150°C (300°F).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. DUBEY et al.** Corrosion Inhibitive Effects of Withania Somnifera (A medicinal plant) on Aluminium in HCl Solution. *RESEARCH JOURNAL OF RECENT SCIENCES,* 01 January 2012, vol. 1 (73), ISSN 2277-2502, 2277-2502

- Production Enhancement with Acid Stimulation. PennWell, 2008
- **BRUCE D. CRAIG.** Hand Book of Corrosion Data. 88